(19) Europäisches Patentamt
European Patent Office
Office européen des brevets

(11) Veröffentlichungsnummer: **0 495 365 A1**

(12) # EUROPÄISCHE PATENTANMELDUNG

(21) Anmeldenummer: **92100110.3**

(51) Int. Cl.[5]: **C08F 236/18**, C08F 2/22

(22) Anmeldetag: **07.01.92**

(30) Priorität: **18.01.91 DE 4101372**

(43) Veröffentlichungstag der Anmeldung: **22.07.92 Patentblatt 92/30**

(84) Benannte Vertragsstaaten: **DE FR GB IT**

(71) Anmelder: **BAYER AG**
**W-5090 Leverkusen 1 Bayerwerk(DE)**

(72) Erfinder: **Lucas, Heinz-Werner, Dr.**
**Leuchter Gemark 7**
**W-5060 Bergisch Gladbach 2(DE)**
Erfinder: **Peter, Rolf, Dr.**
**Am weissen Kreuz 9**
**W-4047 Dormagen(DE)**
Erfinder: **Königshofen, Heinrich, Dr.**
**Am Mühlenberg 26**
**W-5060 Bergisch Gladbach 2(DE)**
Erfinder: **Witkowski, Reiner, Dr.**
**Pausmühlenkamp 15**
**W-4300 Essen 11(DE)**
Erfinder: **Ganster, Otto, Dr.**
**Droste-Hülshoff-Strasse 5**
**W-5068 Odenthal(DE)**
Erfinder: **Arend, Günter, Dr.**
**Claudiusstrasse 42**
**W-4047 Dormagen(DE)**
Erfinder: **Hombach, Rudolf, Dr.**
**Johann-Janssen-Strasse 24**
**W-5090 Leverkusen(DE)**

(54) **Verfahren zur Herstellung wässriger Dispersionen von Chloroprenpolymerisaten.**

(57) Nach einem Saat-Zulauf-Verfahren unter definierten Bedingungen lassen sich wäßrige Dispersionen auf Basis Carboxylgruppen-haltiger Chloroprenpolymerisate herstellen, die sich hervorragend als Klebstoff-Rohstoffe eignen.

EP 0 495 365 A1

Die Endung betrifft ein Verfahren zur Herstellung wäßriger Dispersionen Carboxylgruppen-haltiger Chloroprenpolymerisate, die sich als Klebstoff-Rohstoffe mit ausgezeichneter Haftung, insbesondere auf Gummi und Metallen, eignen.

Kontaktkleber sind Klebstoffe, die man auf beide zu verbindenden Teile aufbringt und antrocknen läßt; durch anschließendes Fügen beider Teile unter Druck erhält man eine Verbindung mit hoher Anfangsfestigkeit. Wegen ihrer guten Kontaktklebrigkeit sind Chloroprenhomo- und -copolymerisate geeignete Rohstoffe für solche Kontaktkleber.

Wenn auch diese Klebstoffe auf Chloroprenpolymerisat-Basis noch immer vorwiegend organische Lösungsmittel enthalten, besteht doch aus ökologischen und ökonomischen Gründen ein Bedarf an geeigneten wäßrigen Dispersionen. Diese Dispersionen sollen sauer bis neutral sein und vorzugsweise pH-Werte von 2 bis 8, insbesondere 6 bis 8, besitzen. Sie sollen scherstabil sein, damit sie bei Scherbelastungen, wie sie beispielsweise beim Spritzen auftreten, nicht zu Koagulatausscheidungen führen.

Wäßrige Dispersionen Carboxylgruppen-haltiger Chloroprenpolymerisate sind z.B. aus der DE-PS 24 26 012 (= US 4 128 514) und der DE-OS 25 00 545 bekannt. Diese Dispersionen werden durch Polymerisation der Monomeren (neben Chloropren mindestens eine $\alpha,\beta$-ethylenisch ungesättigte Carbonsäure wie Methacrylsäure) in wäßriger Phase in Gegenwart von Schutzkolloiden hergestellt; als geeignete Schutzkolloide werden Polyvinylalkohol und Hydroxyalkylcellulose empfohlen. Typische anionische, kationische oder nichtionische Emulgatoren werden entweder überhaupt nicht oder nur in sehr geringen Mengen verwendet. Die so erhaltenen Dispersionen sollen auch als Klebstoff-Rohstoffe geeignet sein.

In der Dispersion enthaltene Schutzkolloide verleihen aufgrund ihrer ausgeprägten Hydrophilie dem getrockneten Polymerisatfilm die Eigenschaft, in feuchter Umgebung unerwünscht viel Wasser aufzunehmen. Da man von getrockneten Klebstoffschichten verlangt, daß sie auch unter ungünstigen Umständen wenig oder gar nicht quellen, sind die Chloroprenpolymerisat-Dispersionen gemäß DE-PS 24 26 012 und DE-OS 25 00 545 als Klebstoff-Rohstoffe nur bedingt geeignet.

Im übrigen enthalten die Dispersionen der DE-PS 24 26 012 bzw. der DE-OS 25 00 545 auch Polymerisatteilchen, deren Duchmesser mehr als 1 µm beträgt. Diese Teilchen neigen zum Sedimentieren; vor der Weiterverarbeitung ist deshalb ein zusätzlicher Arbeitsschritt notwendig, um das Sediment zu redispergieren. Darüber hinaus haben eigene Untersuchungen einen weiteren Nachteil der nach DE-PS 24 26 012 bzw. DE-OS 25 00 545 hergestellten Dispersionen ergeben. Die Chloroprenpolymerisate besitzen einen sehr geringen Anteil copolymerisierter Einheiten $\alpha,\beta$-ethylenisch ungesättigter Carbonsäure; die hohe Konzentration von Carboxylgruppen in der wäßrigen Phase weist darauf hin, daß ein großer Teil der Carbonsäure nicht in der gewünschten Weise an der Polymerisation teilgenommen hat.

Aufgabe der Erfindung war daher das Bereitstellen sedimentationsstabiler saurer oder neutraler wäßriger Dispersionen von Copolymerisaten auf Basis von Chloropren und $\alpha,\beta$-ethylenisch ungesättigter Carbonsäure, wobei der Gehalt an ungesättigter Carbonsäure in der wäßrigen Phase möglichst gering sein soll (d.h. wobei die ungesättigte Carbonsäure in hohem Grad in das Copolymerisat einpolymerisiert sein soll). Die Dispersionen sollen als Klebstoff-Rohstoffe verwendbar sein, wobei sie den Klebstoffschichten eine lange Kontakt-Klebezeit, eine hohe Anfangs- und Endfestigkeit sowie eine geringe Wasseraufnahme verleihen sollen.

Die geringe Einbaurate der ungesättigten Carbonsäure in die Polymerisate der DE-PS 24 26 012 und der DE-OS 25 00 545 ist vornehmlich auf die Copolymerisationsparameter des Systems Chloropren/ungesättigte Carbonsäure (speziell: Chloropren/Methacrylsäure) zurückzuführen; vgl. z.B. Brandrup/Immergut, "Polymer Handbook", 2. Aufl., II-156, Verlag J.Wiley, 1975. Eine höhere Einbaurate kann man in der Regel durch einen höheren Umsatz erzielen; allerdings begünstigen die dafür erforderlichen Reaktionszeiten und höheren Initiatorkonzentrationen auch höhere Gelgehalte der Polymerisate.

Überraschenderweise wurde nun gefunden, daß man die gestellte Aufgabe durch eine Polymerisation nach dem sog. "Saat-Zulauf-Verfahren" in Abwesenheit von Schutzkolloiden (aber gegebenenfalls in Anwesenheit ionischer und/oder nichtionischer üblicher Emulgatoren) bei Temperaturen von 5 bis 35, vorzugsweise 10 bis 35 °C, lösen kann, sofern man darauf achtet, daß der Monomerzulauf, gemessen am bereits vorhandenen Polymerisat, bestimmte niedrige Werte nicht überschreitet.

Gegenstand der Erfindung ist also ein Verfahren zur Herstellung wäßriger Dispersionen von Chloroprenpolymerisat, das

a) 90 bis 99,6 Gew.-% einpolymerisiertes Chloropren, wovon bis zu 10 Gew.-% durch andere copolymerisierbare Monomere und/oder bis zu 2 Gew.-% durch Schwefel, jeweils bezogen auf a), ersetzt sein können, und

b) 0,4 bis 10 Gew.-% einpolymerisierte $\alpha,\beta$-ethylenisch ungesättigte Carbonsäure der Formel

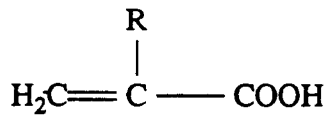
,

worin

R Wasserstoff, $C_1$-$C_4$-Alkyl oder $CH_2COOH$ bedeutet,

enthält,

durch Emulsionspolymerisation bei 5 bis 35, vorzugsweise 10 bis 30 ° C, nach dem Saat-Zulauf-Verfahren in Abwesenheit von Schutzkolloiden, wonach man in Gegenwart von 2 bis 30, vorzugsweise 5 bis 10, Gew.-% aus den Monomeren a und gegebenenfalls b gebildetem Polymerisat ("Saat") 70 bis 98, vorzugsweise 90 bis 95, Gew.-% Monomer (a + b) ("Zulauf") polymerisiert, wobei man den Zulauf derart dosiert, daß das Gewichtsverhältnis von gebildetem Polymerisat/freiem Monomer in der Reaktionsmischung zu jedem Zeitpunkt des weiteren Polymerisationsverfahrens (Zulaufverfahrens) >50:<50, vorzugsweise >70:<30, insbesondere >80:<20, beträgt,

wobei sich die Prozentangaben der Komponenten a) und b) einerseits und von Saat und Zulauf andererseits jeweils auf 100 ergänzen.

Für das erfindungsgemäße Verfahren geeignete "andere" copolymerisierbare Monomere a) umfassen nicht die Carbonsäuren b), aber ein- und zweifach ethylenisch ungesättigte Verbindungen mit 3 bis 8 C-Atomen wie z.B. monoethylenisch ungesättigte Aliphaten wie Acrylnitril, Methacrylnitril, α-Chloracrylnitril, Vinylidenchlorid, Acrylsäure-$C_1$-$C_4$-alkylester, Methacrylsäure-$C_1$-$C_4$-alkylester, vinylsubstituierte aromatische Verbindungen wie Styrol und Vinyltoluole, Diene wie Butadien-1,3, 1-Chlorbutadien-1,3, 2,3-Dichlorbutadien-1,3 und 2-Chlor-3-methylbutadien-1,3.

Für das erfindungsgemäße Verfahren geeignete Carbonsäuren b) umfassen beispielsweise Acrylsäure, Methacrylsäure, 2-Ethylacrylsäure, 2-Propylacrylsäure, 2-Butylacrylsäure, Itaconsäure und deren Mischungen; die bevorzugteste Carbonsäure b) ist Methacrylsäure.

Die Emulsionspolymerisation kann im alkalischen oder sauren wäßrigen Medium erfolgen; vgl. "Ullmanns Enyclopädie der Technischen Chemie", Band 9, S. 366 ff, Verlag Urban und Schwarzenberg, München-Berlin 1957; "Encyclopedia of Polymer Science and Technology", Vol. 3, S. 705 bis 730, John Wiley, New York 1965; "Methoden der Organischen Chemie" (Houben-Weyl) XIV/1, 733 f, Georg Thieme Verlag, Stuttgart 1961. Die Polymerisation im sauren pH-Bereich von 1,5 bis 5, insbesondere von 2 bis 4, wird bevorzugt.

Der pH-Wert kann durch Mineralsäuren oder wasserlösliche organische nicht polymerisierbare Säuren eingestellt und gehalten werden. Zum Schutz vor unbeabsichtigten pH-Wert-Verschiebungen kann das System gepuffert werden.

Zum Start und zur Aufrechterhaltung der Polymerisation werden Aktivatoren bzw. Aktivatorsysteme eingesetzt. Bevorzugte Aktivatoren bzw. Aktivatorsysteme umfassen Wasserstoffperoxid, wasserlösliche Salze der Peroxodischwefelsäure wie Kaliumperoxodisulfat, organische Peroxide und vorzugsweise Redoxsysteme, d.h. Kombinationen anorganischer oder organischer Peroxoverbindungen mit geeigneten Reduktionsmitteln. Beispiele solcher Redoxsysteme umfassen die Kombinationen Kaliumperoxodisulfat/Natriumdithionit, Ammoniumpersulfat/Natriumhydroxymethylsulfinat, Diisopropylhydroperoxid/Schwefelwasserstoff und Peroxid/Triethanolamin. Die Aktivatoren bzw. die Aktivatorsysteme werden im allgemeinen in Mengen von 0,1 bis 3, vorzugsweise 0,2 bis 2,5 mMol pro 100 g eingesetztes polymerisierbares Monomer verwendet.

Als Emulgatoren kommen grundsätzlich anionische, kationische, amphotere und nichtionogene Emulgatoren (mit Ausnahme von Schutzkolloiden) in Frage - also Verbindungen, wie sie beispielsweise in "Methoden der Organischen Chemie" (Houben-Weyl), 4. Aufl. Bd. 141, Georg Thieme Verlag, Stuttgart 1961, S. 190 f beschrieben sind.

Bevorzugte anionische Emulgatoren umfassen Akylarylsulfonate mit 8 bis 18 C-Atomen im Alkylrest, $C_8$-$C_{18}$-Alkylsulfate und -sulfonate, sulfonierte Bernsteinsäureester, sulfonierte, sulfatierte oder phosphatierte Additionsprodukte von Alkylenoxiden (insbesondere Ethylen- und gegebenenfalls Propylenoxiden) an $C_8$-$C_{12}$-Alkylphenole und wasserlösliche Naphthalinsulfonsäure/Formaldehyd-Kondensate. Besonders bevorzugte anionische Emulgatoren sind die Salze des sulfatierten Ethoxylierungsprodukts von Nonylphenol mit vorzugsweise 3 bis 8 Ethoxyeinheiten pro Molekül. Bevorzugte Kationen der anionischen Emulgatoren sind Natrium, Kalium und Ammonium. Weitere bevorzugte anionische Emulgatoren sind die Salze der aus Tallöl, Kiefernbalsam und Wurzelharz gewonnenen Diterpencarbonsäuren und insbesondere deren Disproportionierungs-, Teilhydrierungs -und Polymerisationsprodukte; s. W. Barendrecht, L.T. Lees in

Ullmanns Encyklopädie der technischen Chemie, 4. Aufl., Bd. 12, Verlag Chemie, Weinheim-New York 1976, S. 528-538.

Bevorzugte kationische Emulgatoren umfassen Aminsalze, quartäre Ammonium- und Pyridiniumsalze wie Salze von Dodecylamin, von Veresterungsprodukten aus Paraffinfettsäure und Dimethylaminoethanol, von Kondensationsprodukten aus Ölsäure und N,N-Diethyl-ethylendiamin, von Umsetzungsprodukten primärer Amine mit Bis-(2-chlorethyl)-ether oder 2-Chlor-2'-hydroxydiethylether; Cetylpyridiniumchlorid, Laurylpyridiniumsulfat; die Salze hydrierter oder dehydrierter Abietylamine.

Bevorzugte nichtionogene Emulgatoren umfassen Polyadditionsverbindungen auf Basis von Ethylenoxid und/oder Propylenoxid.

Die Emulgatoren werden im allgemeinen in Mengen von 0,1 bis 4, vorzugsweise 0,5 bis 2,5, Gew.-%, bezogen auf zu polymerisierende Monomere, eingesetzt.

Das erfindungsgemäße Verfahren kann in Gegenwart von sog. Molekulargewichtsreglern (kurz: "Regler") durchgeführt werden; vgl. "Methoden der Organischen Chemie" (Houben-Weyl), 4. Aufl., Bd. 14/1, Georg Thieme Verlag, Stuttgart 1961, S. 197 f, insbesondere S. 318 f. Die Regler können in Mengen von 0,1 bis 3, vorzugsweise 0,3 bis 1,5, Gew.-%, bezogen auf zu polymerisierende Monomere, eingesetzt werden. Geeignete Regler umfassen $C_8$-$C_{18}$-Alkylmercaptane wie Octylmercaptan, lineares oder verzweigtes Dodecylmercaptan, Tridecylmercaptan oder deren Gemische, Di-$C_4$-$C_{20}$-alkylxanthogendisulfide mit linearen, verzweigten oder cyclischen Alkylresten wie Ethylxanthogendisulfid, Isopropylxanthogendisulfid und Bis-(methylentrimethylolpropan)-xanthogendisulfid, Polysulfide und Haloforme wie Jodoform. Mit Hilfe der Regler lassen sich Molekulargewicht und Gelgehalt beeinflussen. Es hat sich herausgestellt, daß die aus den erfindungsgemäß hergestellten Dispersionen fabrizierten Klebstoffe dann besonders gute Eigenschaften aufweisen, wenn der Gelgehalt der Chloroprenpolymerisate 95 Gew.-% nicht übersteigt.

Der Gelgehalt ist der prozentuale Anteil, der in Tetrahydrofuran bei 25 ° C unlöslich ist (250 mg Probe in 25 ml THF 24 Stunden stehen lassen, zentrifugieren, trocknen bei 70 ° C bis zur Gewichtskonstanz).

Unter "Saat-Zulauf-Verfahren" versteht man ein Polymerisationsverfahren, wonach man zunächst aus einem kleinen Teil der gesamten zu polymerisierenden Monomeren ein Emulsionspolymerisat herstellt ("Saat") und dann - im gleichen oder in einem anderen Reaktionsgefäß - den Rest der zu polymerisierenden Monomeren in Gegenwart der Saat polymerisieren läßt. Wesentlich ist, daß die Polymerisation zur Herstellung der Saat zu Ende geführt wird, d.h., daß der Feststoffgehalt auf über 95 Gew.-%, bezogen auf eingesetztes Gesamtmonomer, gestiegen ist; wesentlich ist ferner, daß im anschließenden Zulaufverfahren die zu polymerisierenden Monomeren in einer Form zudosiert werden, die eine vorzeitige Emulsionsbildung im zulaufenden Monomer nicht gestattet; mit anderen Worten: Man kann die Monomeren einerseits und die Emulgatoren und Aktivatoren andererseits regelmäßig getrennt zulaufen lassen. Man darf bei dieser Arbeitsweise dann davon ausgehen, daß wenig neue Polymerisatteilchen entstehen, d.h., daß die Monomeren des Zulaufs auf die Polymerisatteilchen der Saat aufpolymerisieren. Nach einer besonderen Ausführungsform kann der Saat zunächst ein kleiner Teil der Zulauf-Monomeren zugesetzt werden, damit diese Monomeren die Polymerisatteilchen der Saat anquellen und damit in einem "polymerisationsbereiteren" Zustand bringen können. Anschließend kann dann der Rest der Zulauf-Monomeren zudosiert werden, wobei die Zulaufgeschwindigkeit nicht nur von den anspruchsgemäßen Parametern, sondern auch davon abhängt, wie schnell die bei der exothermen Reaktion freiwerdende Energie abgeführt werden kann.

In der Praxis kann ein solches Saat-Zulauf-Verfahren etwa so aussehen:

In Wasser werden Monomer, Emulgator, Regler und die oxidierende Komponente eines Redox-Aktivatorsystems vorgelegt. Man bringt diese Mischung auf die Reaktionstemperatur und startet die Reaktion durch Zugabe der reduzierenden Komponente des Redox-Aktivatorsystems, vorzugsweise in Form einer wäßrigen Lösung, gegebenenfalls in Mischung mit weiterem Emulgator und/oder Regler. Diesen Ansatz läßt man so lange reagieren, bis der Feststoffgehalt nicht mehr anwächst. Das resultierende Polymerisat ist die "Saat".

Falls gewünscht, kann man nun einen kleinen Teil Monomer und gegebenenfalls Regler zugeben und die Saat anquellen lassen.

Anschließend wird man Monomere einerseits und Regler, Emulgator und Aktivatoren anderseits getrennt so zusetzen, daß das anspruchsgemäß geforderte Verhältnis von gebildetem Polymerisat/freiem Monomer in der Reaktionsmischung nicht überschritten wird. Gewöhnlich läßt man die Komponenten gleichmäßig zulaufen, wobei sich Monomerzulauf und Aktivatorzulauf durchaus so überschneiden können, daß der Monomerzulauf vor dem Aktivatorzulauf beendet ist.

Die mittlere Teilchengröße des "Saat"-Polymerisats beträgt vorzugsweise 50 bis 100 nm, und die mittlere Teilchengröße des Polymerisats in der erfindungsgemäß hergestellten Dispersion beträgt vorzugsweise 100 bis 300 und insbesondere 100 bis 200 nm mit der Maßgabe, daß die mittlere Teilchengröße während des Zulauf-Polymerisationsverfahrens um mindestens 50 % wächst. Unter "mittlerer Teilchengröße" im Sinne der Erfindung versteht man den $\overline{D}_{vn}$- Wert nach DIN 53 206, d.h. den Durchmesser, der zum

arithmetischen Mittel aller Teilchenvolumen bzw. -massen gehört.

Die mittlere Teilchengröße kann mittels Ultrazentrifugen-Messungen (H.G. Müller, Colloid & Polymer Sci. 267, 1113-1116 (1989)) bestimmt werden.

Nach dem erfindungsgemäßen Verfahren lassen sich Dispersionen herstellen, die nicht mehr als 1 Gew.-%, bezogen auf Feststoff, Polymerisatteilchen mit einer mittleren Teilchengröße über 1 µm enthalten.

Das erfindungsgemäße Verfahren kann bis zu einem Monomer-Endumsatz von mehr als 85, bevorzugt mehr als 95, Gew.-% geführt werden. Aber auch zu jedem beliebigen früheren Zeitpunkt kann die Reaktion durch Zugabe von Polymerisationsinhibitoren wie Diethylhydroxylamin oder Phenothiazin/Butylbrenzkatechin-Mischungen zum Stillstand gebracht werden. Restmonomere können wie üblich, z.B. mittels Wasserdampf, entfernt werden.

Die bei Polymerisationsende im saueren pH-Bereich anfallende Dispersion kann durch Zugabe von wäßriger Kali- oder Natronlauge, durch Zugabe von Ammoniak oder von Aminen, wie z.B. Diethanolamin oder Triethanolamin, in den gewünschten pH-Bereich, vorzugsweise in den Bereich zwischen pH = 6 bis 8, gestellt werden.

Die erfindungsgemäß hergestellten Dispersionen eignen sich zur Herstellung wäßriger Klebstoffe, die frei von oder arm an organischen Lösungsmitteln sind. In diesem Zusammenhang bedeutet "arm" einen Gehalt von weniger als 30 Gew.-% (organisches Lösungsmittel), bezogen auf fertigen Klebstoff.

Zur Herstellung von Klebstoffen aus erfindungsgemäß hergestellten Dispersionen können beispielsweise Füllstoffe wie Quarzmehl, Quarzsand, hochdisperse Kieselsäure, Schwerspat, Calciumcarbonat, Kreide, Dolomit oder Talkum, gegebenenfalls zusammen mit Netzmitteln, wie z.B. Polyphosphaten wie Natriumhexametaphosphat, Naphthalinsulfonsäure, Ammonium- oder Natriumpolyacrylsäuresalze, eingesetzt werden, wobei die Füllstoffe im allgemeinen in Mengen von 10 bis 60%, vorzugsweise von 20 bis 50 Gew.-%, bezogen auf Klebstoff, und die Netzmittel im allgemeinen in Mengen von 0,2 bis 0,6 Gew.-%, bezogen auf Füllstoff, zugesetzt werden.

Besondere Bedeutung als Zusatzmittel haben Zink- und Magnesiumoxid als Akzeptoren für geringe Mengen von Chlorwasserstoff, der von den Polymerisaten abgespalten werden kann.

Weitere geeignete Hilfsmittel sind z.B. in Mengen von 0,01 bis 1 Gew.-%, bezogen auf Klebstoff, einzusetzende organische Verdickungsmittel, wie z.B. Cellulosederivate, Alginate, Stärke, Stärkederivate oder Polyacrylsäure oder in Mengen von 0,05 bis 5 Gew.-%, bezogen auf Klebstoff, einzusetzende anorganische Verdickungsmittel, wie z.B. Bentonite.

Zur Konservierung können den Klebstoffen auch Fungizide zugesetzt werden. Diese kommen im allgemeinen in Mengen von 0,02 bis 1 Gew.-%, bezogen auf Klebstoff, zum Einsatz. Geeignete Fungizide sind beispielsweise Phenol- und Kresolderivate oder zinnorganische Verbindungen.

Auch klebrigmachende Harze, wie z.B. unmodifizierte oder modifizierte Naturharze wie Kollophoniumester oder synthetische Harze wie Phthalatharze können dem Klebstoff zugesetzt werden. Organische Lösungsmittel wie beispielsweise Toluol, Xylol, Butylacetat, Methylethylketon, Ethylacetat, Dioxan oder deren Gemische oder Weichmacher wie beispielsweise solche auf Adipat-, Phthalat- oder Phosphatbasis können den erfindungsgemäß hergestellten Dispersionen zugesetzt werden.

Die so hergestellten Klebstoffe eignen sich zum Verkleben beliebiger Klebstoffe gleicher oder verschiedener Art, z.B. von Holz, Papier, Kunststoffen, Textilien, Leder, Gummi und anorganischen Materialien, wie Keramik, Steingut oder Asbestzement.

Die Prozentangaben der nachfolgenden Beispiele beziehen sich auf das Gewicht; Teile sind Gewichtsteile.

## Beispiele

### Prüfungen

Bestimmung des Gelgehaltes

Die Dispersion wird auf eine Glasplatte aufgetragen und 3 Tage bei Raumtemperatur unter einer Stickstoffatmosphäre zu einem Film aufgetrocknet. 250 mg Probe werden in 25 ml THF (versetzt mit 1 g Polymerisationsinhibitor je Liter THF) 24 Stunden bei Raumtemperatur in einem abgeschlossenen Gefäß gelöst bzw. gequollen. Die Mischung wird 1 Stunde lang bei 20.000 Upm ultrazentrifugiert und der Gewichtsanteil des abzentrifugierten Materials nach Trocknung bestimmt.

Bestimmung der Schälfestigkeit

Die Prüfung erfolgt gemäß DIN 53 273.
Auf zwei Prüfkörper (Nora-Gummi, gerauht, 100*30 mm) wird ein 100 µm dicker Naßfilm der Dispersion aufgetragen und 1 Stunde bei Raumtemperatur gelüftet. Anschließend werden die Prüflinge 10 Sekunden lang mit 4 bar zusammengefügt. Es erfolgt eine Reißprüfung auf einer handelsüblichen Zugprüfmaschine bei Raumtemperatur. Es werden die Festigkeitswerte sofort nach der Verklebung, nach 1 und 9 Tagen ermittelt.

Bestimmung der Zugscherfestigkeit

Buchenholzprüflinge mit den Abmessungen 40*20*5 mm werden zweimal mit der Dispersion eingestrichen, so daß jeweils ein 100 µm dicker Naßfilm entsteht. Nach einer Trockenzeit von einer halben Stunde bei Raumtemperatur werden die Prüfkörper auf einer Fläche von 20*10 mm überlappend gefügt (1 Minute, 0,3 bar). Die Messung der Zugscherfestigkeit erfolgt sofort nach der Verklebung, nach 1 und 9 Tagen.

Bestimmung des Carboxylatgruppengehalts im Serum und im Polymerisat

Die Bestimmung erfolgt durch konduktometrische Tritration in Abhängigkeit vom pH-Wert.
Die Leitfähigkeit des Originallatex und des Latex nach erfolgtem Serumaustausch werden in Abhängigkeit vom eingestellten pH-Wert gemessen. Aus diesen Titrationsdaten lassen sich die Carboxylgruppengehalte im Originallatex (= Summe COOH-Gruppen in Serum + Polymerisat) und im Polymerisat bestimmen.

Bestimmung der Scherstabilität

Die Scherstabilität wird durch Rühren der Dispersion mittels eines U-Turrax-Rührwerks (Fa. IKA) ermittelt. Dabei wird die Dispersion 5,15 und 30 Minuten bei 5000 UPM geschert und danach auf Stippenbildung oder Koagulat hin untersucht.
Zuordnung:
5 Minuten Laufzeit ohne Koagulat: nicht ausreichend (-)
15 Minuten Laufzeit ohne Koagulat: befriedigend (o)
30 Minuten Laufzeit ohne Koagulat: sehr gut (+)
Die Bestimmung des E-Moduls erfolgt nach DIN 53 455 und 53 457.

Bestimmung der Wasseraufnahme

1. Probenvorbereitung

Entsprechend der Formel:

$$\frac{5{,}6 \text{ x Dichte Polymerisat}}{\text{Festgehalt}} = \text{g Dispersion}$$

wird in eine Weißblechschale (60 mm ⌀ x 8 mm Höhe) soviel Dispersion eingefüllt, daß ein Film von 2 mm Dicke entsteht.

Bis zur völligen Trocknung wird der Klebfilm 14 Tage in Normalklima gelagert Anschließend werden zwei 20 x 20 mm große Prüfkörper gefertigt, auf der Analysenwaage (Genauigkeit ± 0,001 g) gewogen und 24 h in Wasser bei 23 °C gelagert. Danach werden die Prüfkörper mit einem trockenen Papier-Vlies abgetupft.

2. Messung

Abschließend wird das Gewicht der Klebfilme bestimmt. Die Gewichtszunahme (= Wasseraufnahme) wird in % angegeben.

Bestimmung der Kontaktklebezeit [Min.]

Bei Normalklima (23 °C/50 % Luftfeuchtigkeit) werden mit einer Schablone aus Kunstdruckkarton

holzfrei von 246 g/$m^2$ und einer Stärke von 0,32 mm und einem Filmziehgerät auf Karteikarton holzfrei (250 g/$m^2$) 5 mm breite und 0,32 mm dicke Klebstoffilme in einer Länge von ca. 300 mm aufgetragen.

Aus diesen Proben werden in Zeitabständen von 5 Min. ca. 30 mm lange Klebfilme ausgeschnitten und jeweils zwei gekreuzt auf den Stempel einer Apparatur gebracht, so daß eine Klebfläche von 0,25 $cm^2$ entsteht. Diese wird 10 Sek. konstant mit 50 g belastet.

Die Kontaktlebzeit ist beendet, wenn die Klebfilme nach dem Entfernen aus der Apparatur nicht mehr aneinander haften.

Eingesetzte Produkte

Als Emulgator wird das Ammoniumsalz eines sulfatierten ethoxylierten Nonylphenols mit durchschnittlich 4 Ethoxygruppen pro Molekül verwendet.

Das Produkt des Vergleichsbeispiels 1 ist ®Neoprene 115 der Fa. DuPont, Wilmington/Del., USA.

Das Produkt des Vergleichsbeispiels 2 ist ®Dispercoll C 74 der Bayer AG, Leverkusen.

Beispiel 1-5

(Saat-Zulauf-Verfahren mit "interner Saat")

In einem Rührreaktor werden 0,25 Teile Ammoniumpersulfat (APS), 88,5 Teile entionisiertes Wasser, 0,07 Teile Emulgator, 4,2 Teile Chloropren, 0,15 Teile Methacrylsäure und 0,1 Teile tert.-Dodecylmercaptan (t-DDM) gegeben.

Der Reaktionskessel wird auf Polymerisationstemperatur gebracht (siehe Tabelle 1) und durch Start eines Aktivator-Zulaufs, bestehend aus 6,8 Teilen entionisiertem Wasser, 0,05 Teilen Natriumhydroxymethylsulfinat und 1 Teil Emulgator gestartet. Nach 45 Minuten Reaktionszeit ist keine Zunahme des Feststoffgehalts mehr zu beobachten. Die Polymerisatteilchen der resultierenden Dispersionen hatten eine mittlere Teilchengröße von 55 bis 65 µm.

Nun werden zu dieser "Saat" 4,2 Teile Chloropren und 0,15 Teile t-DDM zugegeben. Nach einer Quellzeit von 15 Minuten wird gleichmäßig ein Monomerzulauf aus 90,8 Teilen Chloropren, 3,8 Teilen Methacrylsäure und 1 Teil t-DDM gestartet.

Nach Beendigung des Monomerzulaufs (8 Stunden) und des Aktivatorzulaufs (12 Stunden) wird die Dispersion durch Wasserdampfdestillation vom Restmonomeren befreit und mit Ammoniak auf pH 6,5-7,5 eingestellt.

Nachfolgend bedeuten TG "Teilchengröße" und $\overline{TG}$ "mittlere Teilchengröße".

Tabelle 1

| | Beispiele | | | | |
|---|---|---|---|---|---|
| | 1 | 2 | 3 | 4 | 5 |
| Temp. [°C] | 10 | 15 | 20 | 25 | 30 |
| Gelgehalt [%] | 0 | <5 | <5 | 7 | 35 |
| Schälf. [N/mm] | | | | | |
| - sofort | 1,4 | 0,7 | 0,6 | 0,6 | 0,7 |
| - 1 Tag | 8,3 | 2,2 | 2,0 | 2,0 | 2,2 |
| - 9 Tage | 9,9 | 5,1 | 4,6 | 4,0 | 5,1 |
| Kontaktklebezeit [Std.] | 1 | >8 | >8 | >8 | >8 |
| $\overline{TG}$ [nm] | 147 | 152 | 155 | 151 | 158 |

Beispiele 6 und 7

Auf Basis der Rezeptur des Beispiels 3 wurden weitere Polymerisationsansätze gefahren, wobei die

Methacrylsäuremenge variiert wurde. Die Polymerisation erfolgte analog dem für die Beispiele 1 bis 5 beschriebenen Verfahren.

Tabelle 2

| | Beispiele 6 (Vergleich) | 7 (erfindungsgemäß) | 3 (erfindungsgemäß) |
|---|---|---|---|
| Methacrylsäure [Tle] | 0 | 1.9 | 3,8 |
| Gelgehalt [%] | 0 | <5 | <5 |
| Schälf. [N/mm] | | | |
| - sofort | 0.4 | 0,6 | 0,6 |
| - 1 Tag | 1.7 | 2,0 | 2,0 |
| - 9 Tage | 1.8 | 4,6 | 4,6 |
| Kontaktklebezeit [Std.] | >8 | >8 | >8 |
| TG [nm] | 166 | 151 | 155 |

Beispiele 8 bis 11

Auf Basis der Rezeptur aus Beispiel 3 wurden Dispersionen mit unterschiedlichen Reglergehalten hergestellt.

Tabelle 3

| | Beispiele 8 (Vergleich) | 9 (erfindungsgemäß) | 10 (erfindungsgemäß) | 11 (erfindungsgemäß) | 3 |
|---|---|---|---|---|---|
| t-DDM [Tle] | 0 | 0,25 | 0,50 | 0,75 | 1,00 |
| Gelgehalt | >95 | 95 | 94 | <5 | <5 |
| Schälf. [N/mm] | | | | | |
| - sofort | 0,1 | 1,0 | 1,0 | 1,6 | 0,6 |
| - 1 Tag | 0,1 | 2,9 | 3,4 | 3,0 | 2,0 |
| - 9 Tage | 0,1 | 4,1 | 4,0 | 5,6 | 4,6 |
| Kontaktklebezeit [Std.] | - | >8 | >8 | >8 | >8 |
| TG [nm] | 155 | 147 | 138 | 150 | 155 |

Beispiel 12

(Saat-Zulauf-Verfahren mit "externer Saat")

Saatlatex:

In einem Rührreaktor werden 0,34 Teile Ammoniumpersulfat, 112,75 Teile entionisiertes Wasser, 0,34 Teile 10 %ige wäßrige Schwefelsäure, 0,69 Teile Natriumdodecylbenzolsulfonat, 0,21 Teile Dikaliumhydrogenphosphat, 3,31 Teile Chloropren, 0,14 Teile Methacrylsäure und 0,69 Teile t-DDM gegeben. Der Reaktor wird auf 20 °C temperiert und dann durch Start eines Zulaufs, bestehend aus 13,75 Teilen entionisiertem

Wasser und 0,12 Teilen Natriumhydroxymethylsulfinat, aktiviert (Zulaufzeit 11 Stunden). 30 Minuten nach dem Start des Aktivatorzulaufs wird ein Monomerzulauf aus 63 Teilen Chloropren und 2,35 Teilen Methacrylsäure zudosiert (Zulaufzeit 10 Stunden). $\overline{TG}$ des Saatlatex: 63 nm.

Pfropfstufe:

In einem Rührreaktor werden 0,54 Teile Ammoniumpersulfat, 65 Teile entionisiertes Wasser, 0,17 Teile Emulgator, 0,25 Teile Dikaliumhydrogenphosphat, 0,25 Teile 10 %ige wäßrige Schwefelsäure, 15 Teile des Saatlatex, 2,9 Teile Chloropren, 0,1 Teile Methacrylsäure und 1 Teil t-DDM gegeben. Der Reaktor wird auf 20 °C temperiert und durch Start eines Zulaufs (20 Teile entionisiertes Wasser, 0,18 Teile Natriumhydroxymethylsulfinat, 1 Teil Emulgator, Zulaufzeit 17 Stunden) aktiviert. Nach 30 Minuten wird ein Monomerzulauf aus 93,5 Teilen Chloropren und 3,5 Teilen Methacrylsäure gestartet (Zulaufzeit 15 Stunden).

Tabelle 4

| | |
|---|---|
| Gelgehalt [%] | 20 |
| Schälf. [N/mm] | |
| - sofort | 1,7 |
| - 1 Tag | 3,4 |
| - 9 Tage | 5,8 |
| Kontaktklebezeit [Std.] | >8 |
| $\overline{TG}$ [nm] | 200 |

Vergleichsbeispiele 1 und 2

Zum Vergleich mit den erfindungsgemäß beanspruchten Dispersionen wurden handelsübliche, dem Stand der Technik entsprechende Polychloropren-Latices herangezogen.

| | Beispiel 12 | Vergleichsbeispiele 1 | 2 |
|---|---|---|---|
| Feststoff [%] | 49,7 | 45,3 | 55,1 |
| pH-Wert | 6,9 | 6,9 | 12,4 |
| Gelgehalt [%] | 21 | 55 | 13 |
| mittl. TG [nm] | 208 | 290 | 110 |
| E-Modul [MPa] | 1,15 | 0,61 | |
| Schälfestigkeit [N/mm] | | | |
| - sofort | 1,7 | 0,4 | 3,2 |
| - 1 Tag | 3,4 | 0,9 | 8,8 |
| - 9 Tage | 5,8 | 1,7 | 9,6 |
| Kontaktklebezeit [Std.] | >8 | >8 | <0,5 |
| Wasseraufnahme [%] | 4 | 33 | - |
| Scherstabilität | + | - | - |
| COOH-Gruppen/Serum [%] | 14 | 68 | 80 |
| COOH-Gruppen/ Polymerisate [%] | 86 | 32 | 20 |

**Patentansprüche**

**1.** Verfahren zur Herstellung wäßriger Dispersionen von Chloroprenpolymerisaten, das

a) 90 bis 99,6 Gew.-% einpolymerisiertes Chloropren, wovon bis zu 10 Gew.-% durch andere copolymerisierbare Monomere und/oder bis zu 2 Gew.-% durch Schwefel, jeweils bezogen auf a), ersetzt sein können, und

b) 0,4 bis 10 Gew.-% einpolymerisierte $\alpha,\beta$-ethylenisch ungesättigte Carbonsäure der Formel

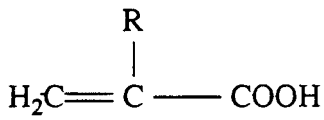
,

worin R Wasserstoff, $C_1$-$C_4$-Alkyl oder $CH_2COOH$ bedeutet,

enthält,

durch Emulsionspolymerisation bei 5 bis 35 °C nach dem Saat-Zulauf-Verfahren in Abwesenheit von Schutzkolloiden, wonach man in Gegenwart von 2 bis 30 Gew.-% aus den Monomeren a und gegebenenfalls b gebildetem Polymerisat ("Saat") 70 bis 98 Gew.-% Monomer (a + b) ("Zulauf") derart dosiert, daß das Gewichtsverhältnis von gebildetem Polymerisat/freiem Monomer in der Reaktionsmischung zu jedem Zeitpunkt des weiteren Polymerisationsverfahrens >50:<50 beträgt,

wobei sich die Prozentangaben der Komponenten a) und b) einerseits und von Saat und Zulauf andererseits jeweils auf 100 ergänzen.

**2.** Verfahren nach Anspruch 1, wonach die Polymerisationstemperatur 10 bis 30 °C beträgt.

**3.** Verfahren nach Anspruch 1, wonach man in Gegenwart von 5 bis 10 Gew.-% Saat 90 bis 95 Gew.-% Zulauf polymerisiert.

**4.** Verfahren nach Anspruch 1, wonach man den Zulauf derart dosiert, daß das Gewichtsverhältnis von gebildetem Polymerisat/freiem Monomer in der Reaktionsmischung zu jedem Zeitpunkt des weiteren Polymerisationsverfahrens >70:<30 beträgt.

**5.** Verfahren nach Anspruch 1, wonach man den Zulauf derart dosiert, daß das Gewichtsverhältnis von gebildetem Polymerisat/freiem Monomer in der Reaktionsmischung zu jedem Zeitpunkt des weiteren Polymerisationsverfahrens >80:<20 beträgt.

**6.** Nach Verfahren gemäß Ansprüchen 1 bis 5 erhältliche Dispersionen.

**7.** Verwendung der Dispersionen nach Anspruch 6 zur Herstellung von Klebstoffen.

Europäisches Patentamt

# EUROPÄISCHER RECHERCHENBERICHT

Nummer der Anmeldung

EP 92 10 0110

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | WORLD PATENTS INDEX LATEST<br>Derwent Publications Ltd., London, GB;<br>AN 84-218299 [35]<br>& SU-A-1 065 434 (GEVORKYAN A.V. ET AL.) 7. Januar 1984<br>* Zusammenfassung *<br>----- | 1-7 | C08F236/18<br>C08F2/22 |
| | | | **RECHERCHIERTE SACHGEBIETE (Int. Cl.5 )** |
| | | | C08F |

Der vorliegende Recherchenbericht wurde für alle Patentansprüche erstellt

| Recherchenort | Abschlußdatum der Recherche | Prüfer |
|---|---|---|
| DEN HAAG | 10 APRIL 1992 | VAN HUMBEECK F. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)